(19) Europäisches Patentamt
European Patent Office
Office européen des brevets

(11) **EP 3 830 624 B1**

(12) **EUROPEAN PATENT SPECIFICATION**

(45) Date of publication and mention
of the grant of the patent:
**30.07.2025  Bulletin 2025/31**

(21) Application number: **18778392.3**

(22) Date of filing: **13.09.2018**

(51) International Patent Classification (IPC):
*G02B 13/00* (2006.01)   *G02B 13/02* (2006.01)
*G02B 17/00* (2006.01)   *G02B 17/04* (2006.01)
*G02B 17/02* (2006.01)

(52) Cooperative Patent Classification (CPC):
**G02B 13/0065; G02B 13/007; G02B 17/023;**
G02B 13/02; G02B 17/045

(86) International application number:
**PCT/EP2018/074819**

(87) International publication number:
**WO 2020/052771 (19.03.2020 Gazette 2020/12)**

(54) **LIGHT RAY PATH FOLDING STRUCTURE FOR AN IMAGING SYSTEM, AND ELECTRONIC DEVICE COMPRISING SAID IMAGING SYSTEM**

LICHTSTRAHLENGANGFALTSTRUKTUR FÜR EIN BILDGEBUNGSSYSTEM UND ELEKTRONISCHE VORRICHTUNG MIT DIESEM BILDGEBUNGSSYSTEM

STRUCTURE DE PLIAGE DE TRAJET DE RAYONS LUMINEUX POUR UN SYSTÈME D'IMAGERIE, ET DISPOSITIF ÉLECTRONIQUE COMPRENANT LEDIT SYSTÈME D'IMAGERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.06.2021  Bulletin 2021/23**

(73) Proprietor: HUAWEI TECHNOLOGIES CO., LTD.
**Shenzhen, Guangdong 518129 (CN)**

(72) Inventor: **JUHOLA, Mikko**
**16440 Kista (SE)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
EP-A1- 1 683 472      EP-B1- 1 683 472
CN-A- 102 495 436     CN-Y- 201 054 037
GB-A- 756 475         JP-A- 2002 350 930
JP-A- 2013 122 538    US-A1- 2012 026 384
US-A1- 2016 353 008   US-A1- 2017 139 184
US-B2- 7 382 546      US-B2- 9 323 030

**Description**

TECHNICAL FIELD

The disclosure relates to a light ray path folding structure for use in an imaging system of an electronic device.

BACKGROUND

There are several difficulties relating to imaging systems for portable electronic devices. Electronic devices such as mobile phones preferably have as small outer dimensions as possible, while imaging systems require certain dimensions in order to provide sufficiently good image sharpness, spatial frequency, sensitivity etc.

One problem relates to how to provide a mobile camera having a very long focal length, such as one equivalent to a conventional 280 mm lens system.

There have been made attempts at solving this problem by folding the light ray path, such in Cassegrain double reflection-based systems. One Cassegrain embodiment comprises a parabolic primary mirror and a hyperbolic secondary mirror that reflects the light back down through a hole in the primary. By folding the light ray path, the design is made more compact.

However, the secondary mirror obscures a central portion of the entrance aperture of the system, leaving only a ring-shaped entrance aperture which has a significantly reduced performance compared to a design comprising a fully open entrance aperture. The larger the secondary mirror, the lower the MTF (modulation transfer function) value becomes at lower spatial frequencies. MTF is used for quantifying the overall imaging performance of a system in terms of resolution and contrast.

The MTF may be improved by providing a larger entrance aperture to the imaging system, which reduces the diffraction and improves the sensitivity at low light. The larger the entrance aperture, the wider the light ray path and, hence, the better the performance of the imaging system.

GB 756 475 A relates to devices for use with photographic and cinematographic apparatus, having only one lens, for the photographing or projection of stereoscopic images, composed of images for the left and right eye respectively arranged side by side on a carrier of the light-sensitive emulsion. Such devices can comprise a prism, in which every ray is reflected three times.

EP 1 683 472 A1 describes a viewing instrument having a variable direction of view. The viewing instrument comprises a shaft, a sensor mounted in the distal end of the shaft such that the image plane of the sensor is parallel to the longitudinal axis of the shaft, and a reflecting element that rotates about an axis perpendicular to the longitudinal axis of the shaft. A negative lens may be mounted adjacent the reflecting element, and a positive lens may be positioned adjacent the image sensor.

JP2013122538A discloses an infra-red camera with a folding path.

SUMMARY

The invention is defined by the independent claims. Advantageous embodiments of the invention are given in the dependent claims. In the following, embodiments not falling within the scope of the claims are to be understood as examples useful for understanding the invention.

It is an object to provide an improved light ray path folding structure which allows a wider light ray path to enter an imaging system, and an imaging system with improved performance. The foregoing and other objects are achieved by the features of the independent claims. Further implementation forms are apparent from the dependent claims, the description, and the figures.

According to a first aspect, there is provided a light ray path folding structure, the folding structure comprising a reflection passage, a center axis of the reflection passage extending between a first end of the folding structure and a second end of the folding structure, a plane of the first end and a plane of the second end extending at acute angles to the center axis, a light ray path enters the folding structure at an angle such that the width of the light ray path when passing perpendicularly through the plane of the first end equals the width of the light ray path when entering the folding structure multiplied by the square root of the width, such that $Y = \sqrt{2} * X$, the light ray path being folded at least once within the reflection passage by means of at least one reflective surface extending in parallel with the center axis.

Such a folding structure, i.e. a structure in which the light ray path is folded by means of reflection, allows a focal length which is longer than the actual outer dimensions of the folding structure. A folding structure providing a longer focal length, when used in an imaging system such as that of a camera, results in higher magnification and a narrower field of view. An electronic device comprising the folding structure can have a thin form factor while still having a long focal length. The angled light ray path furthermore allows for a light ray path which is wider than an actual entrance aperture through which the light ray path passes and in which relatively wider form the light ray path subsequently enters the folding structure.

In a possible implementation form of the first aspect, the plane of the second end extends at a 90° angle to the plane of the first end, allowing the light ray path to leave the folding structure as unaffected as possible by the surface of the second end.

In a further possible implementation form of the first aspect, the folding structure comprises at least one of a prism and a mirror, allowing for a simple design which may be designed in accordance with specific reflection requirements.

In a further possible implementation form of the first aspect, the folding structure comprises a prism, the first end of the folding structure comprising a flat surface, the second end of the folding structure comprising a flat surface, the reflection passage comprising at least two reflective inner surfaces extending between the flat surfaces, providing a one-piece folding structure which is easy to mount into an imaging system and an electronic device.

The folding structure comprises at least two prisms or mirrors separated by air gaps, each prism comprising at least one reflective inner surface, facilitating a folding structure which is easy to manufacture while still meeting the specific requirements of the imaging system.

In a further possible implementation form of the first aspect,
the folding structure comprises first, second and third prisms arranged in sequence between the first end and the second end of the folding structure, the light ray path entering each one of the first, second, and third prisms through a first surface, folding against a second surface, and exiting through a third surface, a third surface of the first prism extending at least partially in parallel with a first surface of the second prism, and a third surface of the second prism extending at least partially in parallel with a third surface of the third prism, allowing a folding structure which can meet different reflection requirements while still having as small outer dimensions as possible.

In a further possible implementation form of the first aspect,
each third surface of a prism is at least partially arranged at a 90° angle to the first surface of the same prism, each second surface of a prism is at least partially arranged at a 45° angle to the first surface and the third surface of the same prism, allowing multiple prisms to be combined and arranged in sequence, at equal spacings, without having to consider differences in design.

According to a second aspect, there is provided a folded light ray path imaging system comprising a first lens arrangement, a light ray path folding structure according to the above, and an image sensor, the first lens arrangement being arranged at a first end of the folding structure and in parallel with a plane of the first end, the image sensor being arranged at a second end of the folding structure and in parallel with a plane of the second end, a light ray path travelling through the first lens arrangement and the first end of the folding structure into a reflection passage of the folding structure, the light ray path being folded at least twice within the reflection passage by means of at least two reflective inner surfaces, the light ray path exiting the reflection passage through the second end of the folding structure and reaching the image sensor.

The imaging system according to the present disclosure facilitates an imaging system having a wide light ray path and a long focal length, while maintaining small outer dimensions. An electronic device, containing the imaging system, can have a thin form factor while still having a long focal length.

In a possible implementation form of the second aspect, the folded light ray path imaging system comprises a second lens arrangement, the second lens arrangement being arranged between the folding structure and the image sensor, facilitating an even more improved imaging system.

Further according to the second aspect, the folded light ray path imaging system comprises an external prism directing the light ray path into the first lens arrangement, allowing an as compact imaging system as possible, while still maintaining a long focal length.

Further according to the second aspect, the external prism is a half-penta prism, allowing the light ray path to be reliably and stably directed into the folding structure from an angle perpendicular to the electronic device provided with the imaging system.

According to a third aspect, there is provided an electronic device comprising a housing, the folded light ray path imaging system according to the above arranged within the housing, and a light ray path entrance aperture arranged within a wall of the housing, a plane of the entrance aperture being arranged at an acute angle to a first lens arrangement of the imaging system.

The angled entrance aperture allows a light ray path which is wider than the actual entrance aperture, such that the electronic device can comprise a smaller aperture which, in turn, decreases the risks of the outermost component of the imaging system to be damaged e.g. by direct contact or if the electronic device is dropped. In a possible implementation form of the third aspect, the entrance aperture is circular and has an unobstructed inner diameter, allowing an as high MTF value, and hence as good performance, as possible.

In a further possible implementation form of the third aspect,
the entrance aperture is arranged at a 45° angle to a plane of the first lens arrangement, facilitating a ratio between the width of the light ray path and the diameter of the entrance aperture which is as large as possible.

In a further possible implementation form of the third aspect, the width of the light ray path passing through the first lens arrangement equals the width of the light ray path passing through the entrance aperture multiplied by the square root of the width, such that

$$Y=\sqrt{2}*X$$, allowing a light ray path which is wider than the actual entrance aperture, such that the electronic device can comprise a smaller aperture.

In a further possible implementation form of the third aspect, the light ray path reaches an image sensor of the imaging system at a 45° angle to the direction of the light ray path as the light ray path passes through the entrance aperture, facilitating an imaging system wherein the different components can be combined and arranged in sequence without having to consider differences in design, and allowing an electronic device which has as small outer dimensions as possible while also having an imaging system, such as a camera, with improved performance.

This and other aspects will be apparent from and the embodiments described below.

BRIEF DESCRIPTION OF THE DRAWINGS

In the following detailed portion of the present disclosure, the aspects, embodiments, and implementations will be explained in more detail with reference to the example embodiments shown in the drawings, in which:

Fig. 1 shows a schematic, cross-sectional side view of a prior art imaging system;

Fig. 2a shows a schematic top view of an entrance aperture according to the prior art imaging system shown in Fig. 1;

Fig. 2b shows a schematic top view of an entrance aperture according to one embodiment of the present invention;

Fig. 3 shows a schematic, cross-sectional side view of an electronic device according to one embodiment of the present invention;

Fig. 4 shows a schematic, cross-sectional side view of an electronic device according to a further embodiment of the present invention;

Fig. 5 shows a schematic side view of a folding structure according to one embodiment of the present invention;

Fig. 6 shows a schematic side view of a folding structure according to a further embodiment of the present invention;

Fig. 7 shows a schematic side view of an imaging system according to an embodiment of the present invention.

DETAILED DESCRIPTION

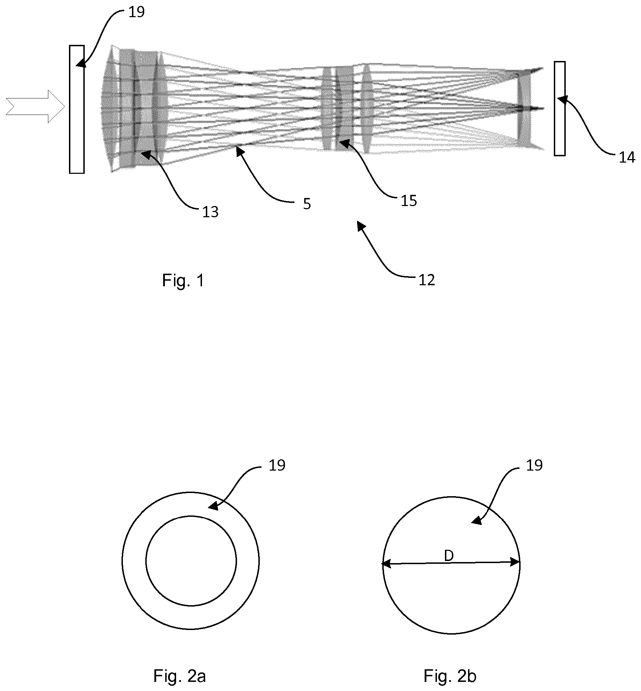

Fig. 1 shows a prior art imaging system wherein the light ray path extends essentially along the center axis of the imaging system having a focal length which corresponds to the actual outer dimensions of the imaging system, as seen along the center axis of the imaging system, and which therefore can only have a very short focal length when used in an electronic device such as a mobile phone or a tablet.

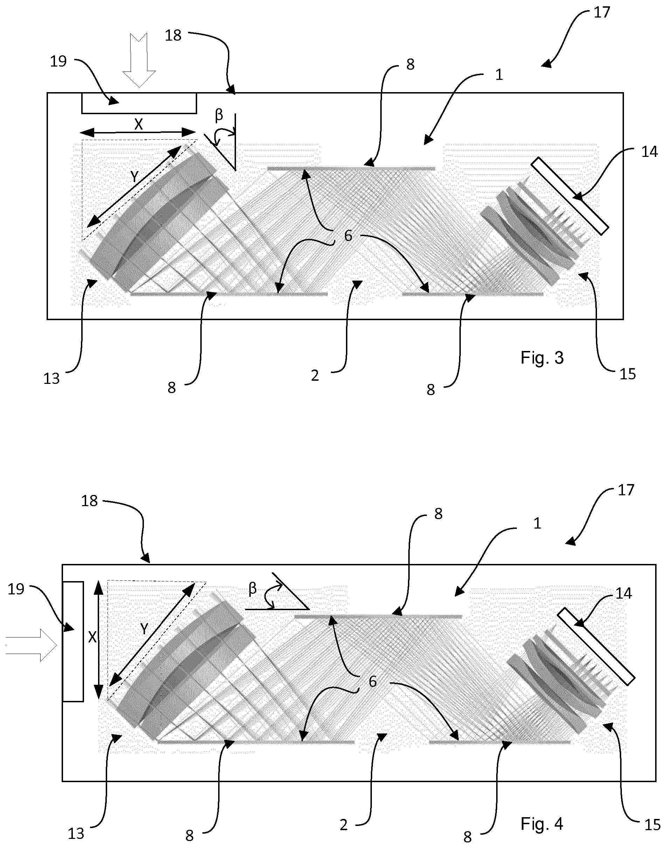

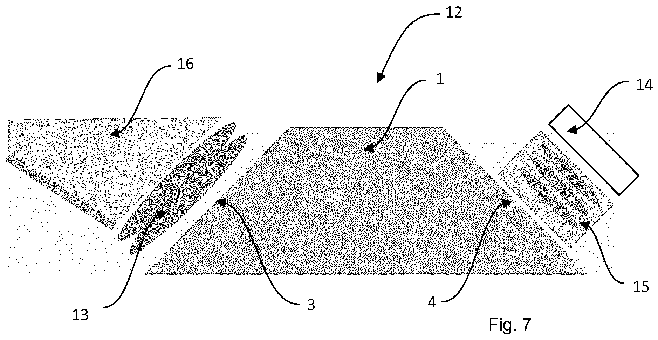

Fig. 7 shows an imaging system according to the present disclosure, wherein the focal length is far longer than the outer dimensions of the imaging system due to the light ray path folding structure 1, shown in more detail in Figs. 3 to 6.

The folding structure 1 comprises a reflection passage 2, the center axis C of which extends between a first end 3 of the folding structure 1 and a second end 4 of the folding structure 1. The surface, i.e. the plane, of the first end 3 and the surface, i.e. plane, of the second end 4 extend at acute angles $\alpha$ to the center axis C.

The light ray path 5 enters the folding structure 1 at an angle $\beta$ such that the width Y of the light ray path 5, when passing perpendicularly through the plane of the first end 3 equals the width X of the light ray path 5 when entering the folding structure 1 multiplied by the square root of the width X, such that $Y = \sqrt{2} * X$. The light ray path 5 is folded at least once within the reflection passage 2 by means of at least one reflective surface 6 extending in parallel with the center axis C.

In one embodiment, the plane of the second end 4 extends at a 90° angle to the plane of the first end 3. The plane of the second end 4 may, however, extend at any suitable angle to the plane of the first end 3.

The folding structure 1 comprises at least one of a prism 7 or a mirror 8. Fig. 7 shows a folding structure embodiment comprising one prism 7, the first end 3 of the folding structure 1 as well as the second end 4 of the folding structure 1 being flat surfaces. The reflection passage 2 of the folding structure 1 comprises at least one reflective inner surface 6 extending between the flat surfaces and being directed towards the center axis C of the folding structure 1, the reflective inner surfaces 6 facilitating total internal reflection within the folding structure 1.

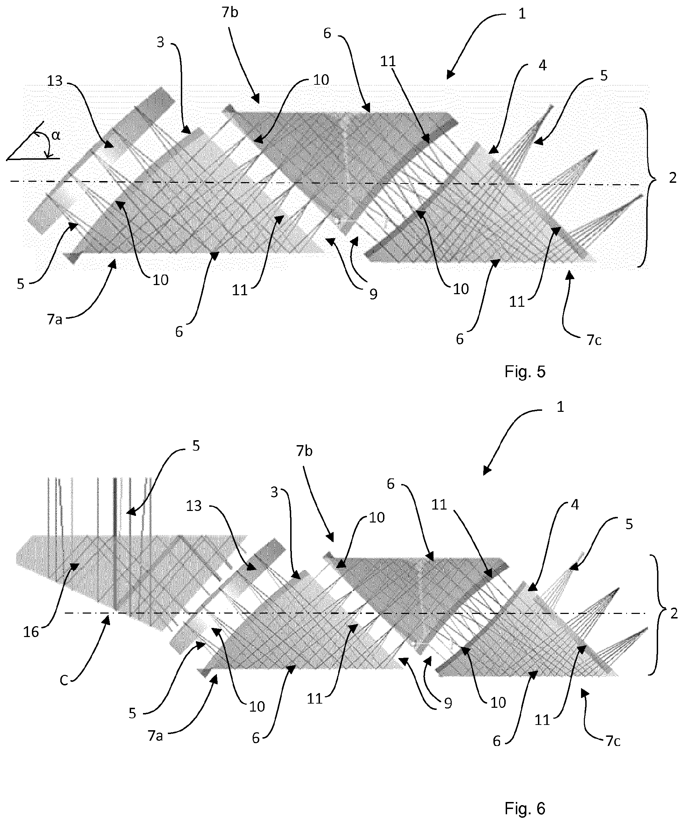

The folding structure 1 may comprise at least two prisms 7 or mirrors 8 separated by air gaps 9, each prism 7 comprising at least one reflective inner surface 6. Figs. 3 and 4 show a folding structure embodiment comprising mirrors arranged on opposite sides of the center axis C of the folding structure, separated by an air gap extending across the center axis C. The reflective inner surfaces 6 of the mirrors 8 are directed towards the center axis C. Figs. 5 and 6 show a folding structure embodiment comprising three prisms 7 arranged in sequence, separated by air gaps. The reflective inner surfaces 6 of the prisms 8 are directed towards the center axis C.

The folding structure 1 may comprise first 7a, second 7b and third 7c prisms arranged in sequence between the first end 3 and the second end 4 of the folding structure 1, as shown in Figs. 5 and 6. The light ray path 5 enters each one of the first 7a, second 7b, and third prisms 7c through the first surface 10, folds against the second surface 6, and exits the folding structure 1 through the third surface 11. The third surface 11 of the first prism 7a extends at least partially in parallel with the first surface 10 of the second prism 7b, and the third surface 11 of the second prism 7b extends at least partially in parallel with the third surface 11 of the third prism 7c.

The prisms 7 may be planar, and have completely flat surfaces, or they may be freeform and have at least partially convex or concave surfaces, in which case the base of the curved surface is considered the plane that is parallel between adjacent prisms.

Each third surface 11 of a prism 7 is preferably arranged at least partially at a 90° angle to the first surface 10 of the same prism 7, and each second surface 6 of a prism 7 is preferably arranged at least partially at a 45° angle to the first surface 10 and the third surface 11 of the same prism 7. Other suitable angles are however possible, in particular when said folding structure comprises more than three prisms 7.

The light ray path folding structure 1 is, in one embodiment, arranged within a folded light ray path imaging system 12 along with a first lens arrangement 13 and an image sensor 14, as shown in Fig. 7.

The first lens arrangement 13 is arranged at the first end 3 of the folding structure 1 and in parallel with the plane of the first end 3. Correspondingly, the image sensor 14 is arranged at a second end 4 of the folding structure 1 and in parallel with the plane of the second end 4.

The light ray path 5 travels through the first lens arrangement 14 and the first end 3 of the folding structure 1, and into the reflection passage 2 of the folding structure 1 wherein the light ray path 5 is folded at least once. The light ray path 5 would be folded three times in the folding structure shown in Fig. 7, by means of three reflective inner surfaces 6. Thereafter, the light ray path 5 exits the reflection passage 2 through the second end 4 of the folding structure 1 and reaches the image sensor 14.

The folded light ray path imaging system 12 may also comprise a second lens arrangement 15 arranged between the folding structure 1 and the image sensor 14.

Furthermore, an external prism 16 is used to direct the light ray path 5 into the first lens arrangement 13. The external prism 16 is a half-penta prism.

Figs. 3 and 4 show embodiments of an electronic device 17 comprising the folded light ray path imaging system 12, arranged within a housing 18. The electronic device further comprises a light ray path entrance aperture 19 arranged within a wall of the housing 18.

Fig. 2a shows a typical prior art light ray path entrance aperture 19 used in a prior art electronic device having an imaging system with a folded light ray path. A large portion of the entrance aperture 19 is blocked by one of the mirrors of the imaging system. Fig. 2b shows one embodiment of the present disclosure, wherein the entrance aperture 19 is circular and has an unobstructed inner diameter D. The entrance aperture 19 may be fully circular or almost fully circular.

An entrance aperture 19 is typically manufactured as a separate piece within the assembly, and any error in size, position etc. of the entrance aperture will impact the performance of the imaging system.

Fig. 3 shows an embodiment wherein the entrance aperture 19 is arranged at the rear surface of the electronic device 17. Fig. 4 shows an embodiment wherein the entrance aperture 19 is arranged at a side surface of the electronic device 17.

The plane of the entrance aperture 19 is arranged at an acute angle to the plane of the first lens arrangement 13 of the imaging system 12. In one embodiment, the entrance aperture 19 is arranged at a 45° angle to the plane of the first lens arrangement 13, however, other suitable angles are possible.

The angular arrangement between the entrance aperture 19 and the first lens arrangement 13 allows the width Y of the light ray path 5, passing through the first lens arrangement 13, to equal the width X of the light ray path 5, passing through the entrance aperture 19, multiplied by the square root of the width X, such that

$$Y = \sqrt{2} * X$$

.

After exiting the folding structure 1 of the electronic device 17, the light ray path 5 may reach the image sensor 14 of the imaging system at a 45° angle to the direction of the light ray path 5 as the light ray path 5 passes through the entrance aperture 19. Fig. 4 shows the light ray path 5 passing through the entrance aperture at 0°, and the light ray path 5 reaching the imaging system at the above-mentioned 45° angle. Fig. 3 shows the light ray path 5 passing through the entrance aperture at 270°, and the light ray path 5 reaching the imaging system at 225°, i.e. at a 45° angle from the direction of the light ray path 5 at the entrance aperture. The angled light ray path allows the electronic device 17 to have a thin form factor, while not limiting the placement of the entrance aperture 19 to only one side of the housing 18.

The various aspects and implementations has been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. An electronic device (17) comprising a housing (18), a folded light ray path imaging system (12) arranged within said housing (18), and a light ray path entrance aperture (19) arranged within a wall of said housing (18),

   said folded light ray path imaging system comprising a first lens arrangement (13), a light ray path folding structure (1), and an image sensor (14),
   said folding structure (1) comprising a reflection passage (2), a center axis (C) of said reflection passage (2) extending between a first end (3) of said folding structure (1) and a second end (4) of said folding structure (1), a plane of said folding structure at said first end (3) and a plane of said folding structure at said second end (4) extending at acute angles (α) to said center axis (C), a light ray path (5) being folded at least once within said reflection passage (2) by means of at least one reflective surface (6) extending in parallel with said center axis (C);

said folding structure (1) comprising at least two prisms (7) or mirrors (8) separated by air gaps (9), each prism (7) comprising at least one reflective inner surface (6);

a plane of said entrance aperture (19) being arranged at an acute angle to the plane of said folding structure at said first end;

said first lens arrangement (13) being arranged at the first end (3) of said folding structure (1) and in parallel with said plane of said folding structure at said first end (3);

said image sensor (14) being arranged at the second end (4) of said folding structure (1) and in parallel with said plane of said folding structure at said second end (4);

said light ray path (5) travelling through said first lens arrangement (13) and said first end (3) of said folding structure (1) into the reflection passage (2) of said folding structure (1);

said light ray path (5) exiting said reflection passage (2) through said second end (4) of said folding structure (1) and reaching said image sensor (14);

said folded light ray path imaging system (12) further comprising an external prism (16) directing said light ray path (5) into said first lens arrangement (13); and

said external prism (16) being a half-penta prism.

2. The electronic device (17) according to claim 1, wherein said plane of said folding structure at said second end (4) extends at a 90° angle to said plane of said folding structure at said first end (3).

3. The electronic device (17) according to claim 1, wherein said folding structure (1) comprises a prism (7), the first end (3) of said folding structure (1) comprising a flat surface, the second end (4) of said folding structure (1) comprising a flat surface, said reflection passage (2) comprising at least one reflective inner surface (6) extending between said flat surfaces.

4. The electronic device (17) according to claim 1, wherein said folding structure (1) comprises first (7a), second (7b) and third (7c) prisms arranged in sequence between said first end (3) and said second end (4) of said folding structure (1),
said light ray path (5) entering each one of said first (7a), second (7b), and third prisms (7c) through a first surface (10), folding against a second surface (6), and exiting through a third surface (11),

a third surface (11) of said first prism (7a) extending at least partially in parallel with a first surface (10) of said second prism (7b), and a third surface (11) of said second prism (7b) extending at least partially in parallel with a first surface (11) of said third prism (7c).

5. The electronic device (17) according to claim 4, wherein each third surface (11) of a prism (7) being at least partially arranged at a 90° angle to the first surface (10) of the same prism (7), each second surface (6) of a prism (7) being at least partially arranged at a 45° angle to said first surface (10) and said third surface (11) of the same prism (7).

6. The electronic device (17) according to any one of the preceding claims, said folded light ray path imaging system (12) further comprising a second lens arrangement (15), said second lens arrangement (15) being arranged between said folding structure (1) and said image sensor (14).

7. The electronic device (17) according to any of the preceding claims, wherein said entrance aperture (19) is circular and has an unobstructed inner diameter (D).

8. The electronic device (17) according to any of the preceding claims, wherein said entrance aperture (19) is arranged at a 45° angle to a plane of said first lens arrangement (13).

9. The electronic device (17) according to any one of the preceding claims, wherein said light ray path (5) reaches said image sensor (14) of said imaging system at a 45° angle to the direction of the light ray path (5) as said light ray path (5) passes through said entrance aperture (19).

**Patentansprüche**

1. Elektronische Vorrichtung (17), umfassend ein Gehäuse (18), ein gefaltetes Lichtstrahlengang-Bildgebungssystem (12), das innerhalb des Gehäuses (18) angeordnet ist, und eine Lichtstrahlengang-Eintrittsöffnung (19), die innerhalb einer Wand des Gehäuses (18) angeordnet ist,

wobei das gefaltete Lichtstrahlengang-Bildgebungssystem eine erste Linsenanordnung (13), eine Lichtstrahlengang-Faltstruktur (1) und einen Bildsensor (14) umfasst,

wobei die Faltstruktur (1) einen Reflexionsdurchgang (2) umfasst, wobei sich eine Mittelachse (C) des Reflexionsdurchgangs (2) zwischen einem ersten Ende (3) der Faltstruktur (1) und einem zweiten Ende (4) der Faltstruktur (1) erstreckt, wobei sich eine Ebene der Faltstruktur an dem ersten Ende (3) und eine Ebene der Faltstruktur an dem zweiten Ende (4) in spitzen Winkeln (α) zu der Mittelachse (C) erstrecken, wobei ein Lichtstrahlengang (5) mindestens einmal innerhalb des Reflexionsdurchgangs (2) mittels mindestens einer reflektierenden Fläche (6) gefaltet wird, die sich parallel zu der Mittelachse (C) erstreckt;

wobei die Faltstruktur (1) mindestens zwei Prismen (7) oder Spiegel (8) umfasst, die durch Luftspalte (9) voneinander getrennt sind, wobei jedes Prisma (7) mindestens eine reflektierende Innenfläche (6) umfasst,

wobei eine Ebene der Eintrittsöffnung (19) in einem spitzen Winkel zu der Ebene der Faltstruktur an dem ersten Ende angeordnet ist;

wobei die erste Linsenanordnung (13) an dem ersten Ende (3) der Faltstruktur (1) und parallel zu der Ebene der Faltstruktur an dem ersten Ende (3) angeordnet ist;

wobei der Bildsensor (14) an dem zweiten Ende (4) der Faltstruktur (1) und parallel zu der Ebene der Faltstruktur an dem zweiten Ende (4) angeordnet ist;

wobei der Lichtstrahlengang (5) durch die erste Linsenanordnung (13) und das erste Ende (3) der Faltstruktur (1) in den Reflexionsdurchgang (2) der Faltstruktur (1) verläuft;

wobei der Lichtstrahlengang (5) aus dem Reflexionsdurchgang (2) durch das zweite Ende (4) der Faltstruktur (1) austritt und den Bildsensor (14) erreicht;

wobei das gefaltete Lichtstrahlengang-Bildgebungssystem (12) ferner ein externes Prisma (16) umfasst, das den Lichtstrahlengang (5) in die erste Linsenanordnung (13) lenkt; und

wobei das externe Prisma (16) ein Halb-Penta-Prisma ist.

2. Elektronische Vorrichtung (17) nach Anspruch 1, wobei sich die Ebene der Faltstruktur an dem zweiten Ende (4) in einem Winkel von 90° zu der Ebene der Faltstruktur an dem ersten Ende (3) erstreckt.

3. Elektronische Vorrichtung (17) nach Anspruch 1, wobei die Faltstruktur (1) ein Prisma (7) umfasst, das erste Ende (3) der Faltstruktur (1) eine flache Fläche umfasst, das zweite Ende (4) der Faltstruktur (1) eine flache Fläche umfasst und der Reflexionsdurchgang (2) mindestens eine reflektierende Innenfläche (6) umfasst, die sich zwischen den flachen Flächen erstreckt.

4. Elektronische Vorrichtung (17) nach Anspruch 1, wobei die Faltstruktur (1) ein erstes (7a), ein zweites (7b) und ein drittes (7c) Prisma umfasst, die nacheinander zwischen dem ersten Ende (3) und dem zweiten Ende (4) der Faltstruktur (1) angeordnet sind, wobei der Lichtstrahlengang (5) in jedes des ersten (7a), zweiten (7b) und dritten Prismas (7c) durch eine erste Fläche (10) eintritt, gegen eine zweite Fläche (6) gefaltet wird und durch eine dritte Fläche (11) austritt, wobei sich eine dritte Fläche (11) des ersten Prismas (7a) zumindest teilweise parallel zu einer ersten Fläche (10) des zweiten Prismas (7b) erstreckt und

wobei sich eine dritte Fläche (11) des zweiten Prismas (7b) zumindest teilweise parallel zu einer ersten Fläche (11) des dritten Prismas (7c) erstreckt.

5. Elektronische Vorrichtung (17) nach Anspruch 4, wobei jede dritte Fläche (11) eines Prismas (7) mindestens teilweise in einem Winkel von 90° zu der ersten Fläche (10) desselben Prismas (7) angeordnet ist, wobei jede zweite Fläche (6) eines Prismas (7) zumindest teilweise in einem Winkel von 45° zu der ersten Fläche (10) und der dritten Fläche (11) desselben Prismas (7) angeordnet ist.

6. Elektronische Vorrichtung (17) nach einem der vorhergehenden Ansprüche, wobei das gefaltete Lichtstrahlengang-Bildgebungssystem (12) ferner eine zweite Linsenanordnung (15) umfasst, wobei die zweite Linsenanordnung (15) zwischen der Faltstruktur (1) und dem Bildsensor (14) angeordnet ist.

7. Elektronische Vorrichtung (17) nach einem der vorhergehenden Ansprüche, wobei die Eintrittsöffnung (19) kreisförmig ist und einen unversperrten inneren Durchmesser (D) aufweist.

8. Elektronische Vorrichtung (17) nach einem der vorhergehenden Ansprüche, wobei die Eintrittsöffnung (19) in einem Winkel von 45° zu einer Ebene der ersten Linsenanordnung (13) angeordnet ist.

9. Elektronische Vorrichtung (17) nach einem der vorhergehenden Ansprüche, wobei der Lichtstrahlengang (5) den Bildsensor (14) des Bildgebungssystems in einem Winkel von 45° zu der Richtung des Lichtstrahlengangs (5) erreicht, wenn der Lichtstrahlengang (5) durch die Eintrittsöffnung (19) tritt.

**Revendications**

1. Dispositif électronique (17) comprenant un boîtier (18), un système d'imagerie de trajets de rayon lumineux plié (12) disposé à l'intérieur dudit boîtier (18), et une ouverture d'entrée de trajet de rayons lumineux (19) disposée à l'intérieur d'une paroi dudit boîtier (18),

ledit système d'imagerie de trajet de rayons lumineux plié comprenant un premier agencement de lentilles (13), une structure de pliage de trajet de rayons lumineux (1) et un capteur d'image (14),

ladite structure de pliage (1) comprenant un passage de réflexion (2), un axe central (C) dudit passage de réflexion (2) se prolongeant entre une première extrémité (3) de ladite structure de pliage (1) et une seconde extrémité (4) de ladite structure de pliage (1), un plan de ladite structure de pliage à ladite première extrémité (3) et un plan de ladite structure de pliage à ladite seconde extrémité (4) se prolongeant à des angles aigus ($\alpha$) par rapport audit axe central (C),

un trajet de rayons lumineux (5) étant plié au moins une fois à l'intérieur dudit passage de réflexion (2) au moyen d'au moins une surface réfléchissante (6) se prolongeant parallèlement audit axe central (C) ;

ladite structure de pliage (1) comprenant au moins deux prismes (7) ou miroirs (8) séparés par des entrefers (9), chaque prisme (7) comprenant au moins une surface intérieure réfléchissante (6) ;

un plan de ladite ouverture d'entrée (19) étant disposé à un angle aigu par rapport au plan de ladite structure de pliage à ladite première extrémité ;

ledit premier agencement de lentilles (13) étant disposé à la première extrémité (3) de ladite structure de pliage (1) et parallèlement audit plan de ladite structure de pliage à ladite première extrémité (3) ;

ledit capteur d'image (14) étant disposé à la seconde extrémité (4) de ladite structure de pliage (1) et parallèlement audit plan de ladite structure de pliage à ladite seconde extrémité (4) ;

ledit trajet de rayons lumineux (5) traversant ledit premier agencement de lentilles (13) et ladite première extrémité (3) de ladite structure de pliage (1) dans le passage de réflexion (2) de ladite structure de pliage (1) ;

ledit trajet de rayons lumineux (5) sortant dudit passage de réflexion (2) à travers ladite seconde extrémité (4) de ladite structure de pliage (1) et atteignant ledit capteur d'image (14) ;

ledit système d'imagerie de trajet de rayons lumineux plié (12) comprenant également un prisme externe (16) dirigeant ledit trajet de rayons lumineux (5) dans ledit premier agencement de lentilles (13) ; et

ledit prisme externe (16) étant un demi-penta-prisme.

2. Dispositif électronique (17) selon la revendication 1, dans lequel ledit plan de ladite structure de pliage à ladite seconde extrémité (4) se prolonge à un angle de 90° par rapport audit plan de ladite structure de pliage à ladite première extrémité (3).

3. Dispositif électronique (17) selon la revendication 1, dans lequel ladite structure de pliage (1) comprend un prisme (7), la première extrémité (3) de ladite structure de pliage (1) comprenant une surface plane, la seconde extrémité (4) de ladite structure de pliage (1) comprenant une surface plane, ledit passage de réflexion (2) comprenant au moins une surface intérieure réfléchissante (6) se prolongeant entre lesdites surfaces planes.

4. Dispositif électronique (17) selon la revendication 1, dans lequel ladite structure de pliage (1) comprend des premier (7a), deuxième (7b) et troisième (7c) prismes disposés en séquence entre ladite première extrémité (3) et ladite seconde extrémité (4) de ladite structure de pliage (1), ledit trajet de rayons lumineux (5) entrant dans chacun desdits premier (7a), deuxième (7b), et troisième prismes (7c) à travers une première surface (10), se pliant contre une deuxième surface (6), et sortant à travers une troisième surface (11),

une troisième surface (11) dudit premier prisme (7a) se prolongeant au moins partiellement parallèlement à une première surface (10) dudit deuxième prisme (7b), et

une troisième surface (11) dudit deuxième prisme (7b) se prolongeant au moins partiellement parallèlement à une première surface (11) dudit troisième prisme (7c).

5. Dispositif électronique (17) selon la revendication 4, dans lequel chaque troisième surface (11) d'un prisme (7) étant au moins partiellement disposée à un angle de 90° par rapport à la première surface (10) du même prisme (7), chaque deuxième surface (6) d'un prisme (7) étant au moins partiellement disposée à un angle de 45° par rapport à ladite première surface (10) et à ladite troisième surface (11) du même prisme (7).

6. Dispositif électronique (17) selon l'une quelconque des revendications précédentes, ledit système d'imagerie de trajet de rayons lumineux plié (12) comprenant également un second agencement de lentilles (15), ledit second agencement de lentilles (15) étant disposé entre ladite structure de pliage (1) et ledit capteur d'image (14).

**7.** Dispositif électronique (17) selon l'une quelconque des revendications précédentes, dans lequel ladite ouverture d'entrée (19) est circulaire et présente un diamètre intérieur non obstrué (D).

**8.** Dispositif électronique (17) selon l'une quelconque des revendications précédentes, dans lequel ladite ouverture d'entrée (19) est disposée à un angle de 45° par rapport à un plan dudit premier agencement de lentilles (13).

**9.** Dispositif électronique (17) selon l'une quelconque des revendications précédentes, dans lequel ledit trajet de rayons lumineux (5) atteint ledit capteur d'image (14) dudit système d'imagerie à un angle de 45° par rapport à la direction du trajet de rayons lumineux (5) lorsque ledit trajet de rayons lumineux (5) passe à travers de ladite ouverture d'entrée (19).

**Fig. 1**

**Fig. 2a**

**Fig. 2b**

Fig. 3

Fig. 4

Fig. 5

Fig. 6

Fig. 7

**EP 3 830 624 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 756475 A
- EP 1683472 A1
- JP 2013122538 A